(19) **Europäisches Patentamt / European Patent Office / Office européen des brevets**

(11) **EP 3 231 531 A1**

(12) # EUROPEAN PATENT APPLICATION
published in accordance with Art. 153(4) EPC

(43) Date of publication:
**18.10.2017 Bulletin 2017/42**

(21) Application number: **16828908.0**

(22) Date of filing: **15.02.2016**

(51) Int Cl.:
**B22C 1/18** (2006.01)          **B22C 9/02** (2006.01)
**B33Y 10/00** (2015.01)          **B33Y 70/00** (2015.01)

(86) International application number:
**PCT/JP2016/054344**

(87) International publication number:
**WO 2017/141337 (24.08.2017 Gazette 2017/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Technology Research Association for Future Additive Manufacturing**
**Tokyo 103-0027 (JP)**

(72) Inventors:
• **NAGAI, Yasuhiro**
  **Takasaki-shi**
  **Gunma 370-0032 (JP)**

• **HATORI, Yuuki**
  **Takasaki-shi**
  **Gunma 370-0032 (JP)**
• **OOBA, Yoshikazu**
  **Yokohama-shi**
  **Kanagawa 222-0033 (JP)**
• **OKANE, Toshimitsu**
  **Tsukuba-shi**
  **Ibaraki 305-8564 (JP)**

(74) Representative: **TBK**
**Bavariaring 4-6**
**80336 München (DE)**

(54) **GRANULAR MATERIAL, MOLD FORMED BY THREE-DIMENSIONAL ADDITIVE MANUFACTURING, PROCESS FOR PRODUCING MOLD BY THREE-DIMENSIONAL ADDITIVE MANUFACTURING, AND DEVICE FOR PRODUCING MOLD BY THREE-DIMENSIONAL ADDITIVE MANUFACTURING**

(57) Provided is a granular material which generates no harmful gas at the time of pouring, reduces a gas defect as one of casting defects, and is readily reusable after pouring, in the manufacture of a three-dimensional laminated and shaped mold. This granular material is a granular material for use in a three-dimensional laminated and shaped mold manufacturing apparatus, and includes magnesium sulfate. The amount of magnesium sulfate included in the granular material is 1 to 10 pts.mass with respect to 100 pts.mass of the granular material. The amount of water included in the granular material is 0.1 mass% or less except for crystallization water of magnesium sulfate.

**F I G. 1**

**Description**

TECHNICAL FIELD

The present invention relates to a three-dimensional laminated and shaped mold manufacturing technique.

BACKGROUND ART

A mold is necessary to manufacture a cast metal. Examples of the mold are a heat-hardening mold, self-hardening mold, and gas-hardening mold. For example, the self-hardening mold is generally manufactured by a method of filling kneaded sand including a refractory granular material, hardener, and binder in a wooden model or resin model (to be collectively called "a model" hereinafter), and hardening the binder. To manufacture a mold having a complicated shape, however, it is necessary to increase the number of models, and this complicates the process. Also, even when the number of models can be increased, no mold can be manufactured if the models cannot be removed from the mold.

To solve these problems, a mold manufacturing technique using three-dimensional laminating and shaping capable of directly manufacturing a mold without using any model has been proposed. Three-dimensional laminating and shaping is a method of manufacturing a mold by directly using a three-dimensional shape input on a CAD (Computer Aided Design) system as a stereomodel (three-dimensional model).

A known example of this mold manufacturing technique using three-dimensional laminating and shaping is a method (two-component self-hardening mold) of repeating an operation of laminating (recoating) kneaded sand obtained by mixing a refractory granular material and liquid hardener and printing a binder on the kneaded sand based on CAD data, and removing the kneaded sand from an unprinted portion after the binder is hardened (see, e.g., patent literature 1).

Another known example of the mold manufacturing technique using three-dimensional laminating and shaping is a method of spraying and drying water glass as an inorganic binder, mixing the water glass and a refractory granular material, printing water, removing the sand mixture from an unprinted portion, and shaping a mold by mold drying after that (see patent literature 2).

CITATION LIST

PATENT LITERATURE

    Patent literature 1: Japanese Patent No. 5249447
    Patent literature 2: Japanese PCT National Publication No. 2014-516845

SUMMARY OF THE INVENTION

TECHNICAL PROBLEM

Unfortunately, the mold manufactured by the three-dimensional laminating and shaping of the two-component self-hardening mold disclosed in patent literature 1 is formed by using an organic binder. Therefore, the organic binder forming the mold thermally decomposes at the time of pouring (pouring is to pour a molten metal into a mold), and this is one cause of inducing a gas defect (pinhole or blow hole) as one of metal casting defects. In addition, the mold after pouring is disposed without being reused, or reused by being reproduced by calcination. However, reuse of the material is not easy.

On the other hand, in the method of mixing the product obtained by spraying and draying alkali metal silicate (water glass) and a refractory granular material and printing water disclosed in patent literature 2, the mold is formed by using an inorganic binder. Therefore, the sand mold after pouring has a low mold collapsibility because the binder thermally vitrifies, and the refractory granular material cannot be reused.

The present invention enables to provide a technique of solving the above-described problem.

SOLUTION TO PROBLEM

One aspect of the present invention provides a granular material for use in a three-dimensional laminated and shaped mold manufacturing apparatus, including magnesium sulfate.

Another aspect of the present invention provides a three-dimensional laminated and shaped mold shaped by being selectively hardened by water by using the abovementioned granular material.

Still another aspect of the present invention provides a three-dimensional laminated and shaped mold manufacturing apparatus using

a granular material including magnesium sulfate, as a shaping material to be spread into layers and selectively bonded, and

water as a hardening agent for selectively bonding the granular material.

Still another aspect of the present invention provides a three-dimensional laminated and shaped mold manufacturing method including

producing a granular material including magnesium sulfate,

spreading the magnesium sulfate-including granular material into layers,

hardening the granular material spread into layers by selectively ejecting water such that the granular material spread into layers is bonded in accordance with a target three-dimensional laminated and shaped mold, and

repeating the spreading and the hardening until the target three-dimensional laminated and shaped mold is shaped.

ADVANTAGEOUS EFFECTS OF INVENTION

The present invention can reduce a gas defect as one of casting defects and facilitates reusing a granular material after pouring in the manufacture of a three-dimensional laminated and shaped mold.

BRIEF DESCRIPTION OF DRAWINGS

Fig. 1 is view showing a three-dimensional laminated and shaped mold manufacturing apparatus of this embodiment and an outline of the shaping procedure;

Fig. 2 is a view showing a columnar laminated product manufacturing by examples;

Fig. 3 is a flow chart showing the steps of a three-dimensional laminated and shaped mold manufacturing method of this embodiment;

Fig. 4A is a flowchart showing the steps of a method of producing a magnesium sulfate-including granular material of this embodiment; and

Fig. 4B is a flow chart showing other examples of the steps of the method of producing the magnesium sulfate-including granular material of this embodiment.

DESCRIPTION OF THE EMBODIMENTS

Preferred embodiments of the present invention will now be described in detail with reference to the drawings. It should be noted that outlines of the arrangements set forth in these embodiments do not limit the scope of the present invention unless it is specifically stated otherwise.

<<Three-Dimensional Laminated and Shaped Mold Manufacturing Apparatus>>

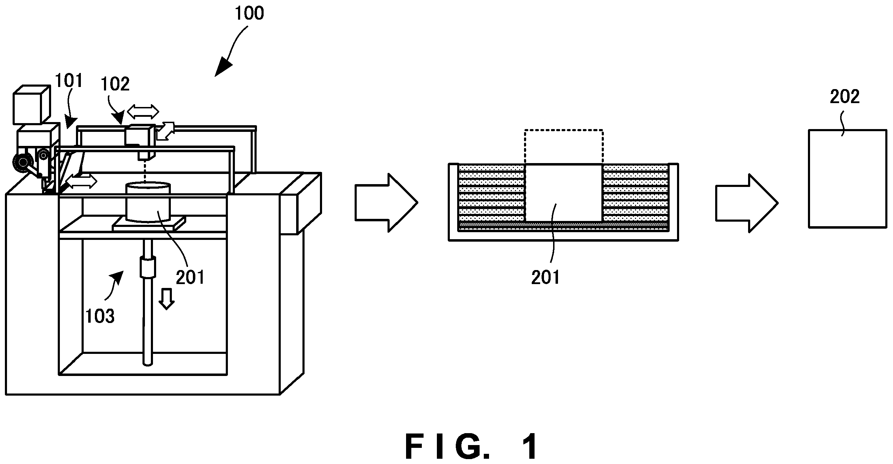

Fig. 1 is a view showing an outline of the shaping procedure of a three-dimensional laminated and shaped mold manufacturing apparatus 100 of this embodiment.

The three-dimensional laminated and shaped mold manufacturing apparatus 100 mainly includes a blade mechanism 101, printing nozzle head mechanism 102, and support table mechanism 103. The apparatus further includes a controller (not shown) for controlling the operation of each mechanism by using three-dimensional data of a shaping target.

The blade mechanism 101 includes a recoater, and laminates a refractory granular material mixed or coated with magnesium sulfate, which is the material of a three-dimensional laminated and shaped mold, and having a predetermined thickness, on a water-bonded shaped product. The printing nozzle head mechanism 102 selectively bonds the laminated refractory granular material including magnesium sulfate by printing water on the refractory granular material, thereby shaping one layer. When shaping of one layer is complete, the support table mechanism 103 moves down by the distance of one layer, thereby implementing laminating and shaping by a predetermined thickness.

Fig. 1 shows an unfinished shaped product 201 and finished shaped product 202.

<<Three-Dimensional Laminated and Shaped Mold Manufacturing Method>>

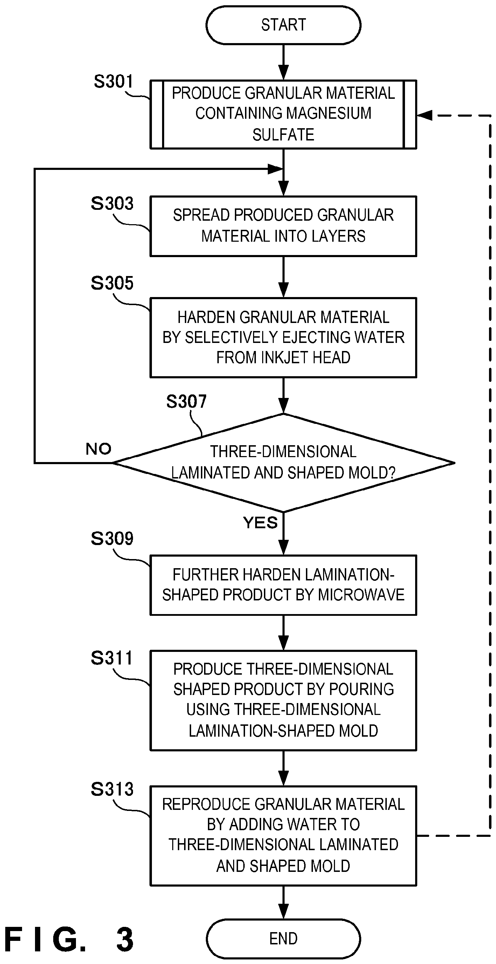

Fig. 3 is a flowchart showing the steps of a three-dimensional laminated and shaped mold manufacturing method of this embodiment.

First, in step S301, magnesium sulfate is added as an inorganic binder to a granular material (in this example, artificial sand) to be used in the manufacture of a three-dimensional laminated and shaped mold.

The produced magnesium sulfate-including granular material is provided as a laminating and shaping material of the three-dimensional laminated and shaped mold manufacturing apparatus 100. In step S303, the manufacturing apparatus 100 causes the blade mechanism 101 to spread the magnesium sulfate-including granular material into layers. In step S305, the manufacturing apparatus 100 causes the printing nozzle head mechanism 102 to selectively eject water from inkjet head, in accordance with a three-dimensional laminated and shaped mold as a shaping target, against the magnesium-sulfate including granular material spread into layers, thereby selectively hardening the magnesium-sulfate-including granular material. Note that hardening of the magnesium sulfate-including granular material is implemented basically because anhydrous magnesium sulfate is changed into a magnesium sulfate hydrate by the ejected water.

In step S307, the manufacturing apparatus 100 determines whether the manufacture of the three-dimensional laminated and shaped mold is complete. If the manufacture of the three-dimensional laminated and shaped mold is not complete, the manufacturing apparatus 100 returns to step S303, and laminates and shapes the next layer. On the other hand, if the manufacture of the three-dimensional laminated and shaped mold is complete, the manufacturing apparatus 100 advances to step S309, and irradiates the manufactured three-dimensional laminated and shaped mold with a microwave in order to further harden the three-dimensional laminated and shaped mold.

In step S311, the material (e.g., iron, copper, or aluminum) of a three-dimensional shaped product is poured by using the manufactured three-dimensional laminated and shaped mold, thereby producing the three-dimensional shaped product. If it is necessary to produce a plurality of identical three-dimensional shaped products, the pouring process is performed again.

When the pouring process using the manufactured three-dimensional laminated and shaped mold is complete, the process advances to step S313, and water is added to the three-dimensional laminated and shaped mold, thereby decomposing the three-dimensional laminated and shaped mold and reproducing the original granular material. Note that the reproduced granular material is washed and reused as the granular material to which magnesium sulfate is added as an inorganic binder in step S301.

(Granular Material Producing Method)

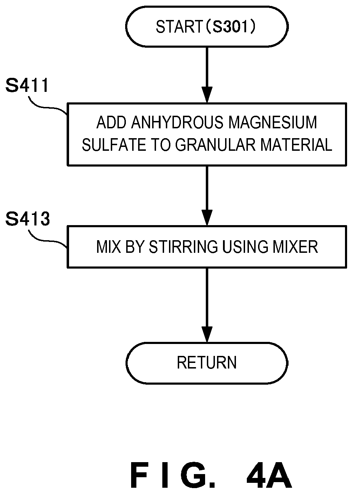

Fig. 4A is a flowchart showing the steps of the magnesium sulfate-including granular material producing method (S301) of this embodiment. Note that Fig. 4A shows anhydrous magnesium sulfate as an example, but an analogous mixture can be produced by using a magnesium sulfate hydrate and used as the shaping material of a three-dimensional laminated and shaped mold.

In step S411, anhydrous magnesium sulfate is added to a granular material. In step S413, a mixture of the granular material and anhydrous magnesium sulfate is produced by stirring by a mixer.

(Another Granular Material Producing Method)

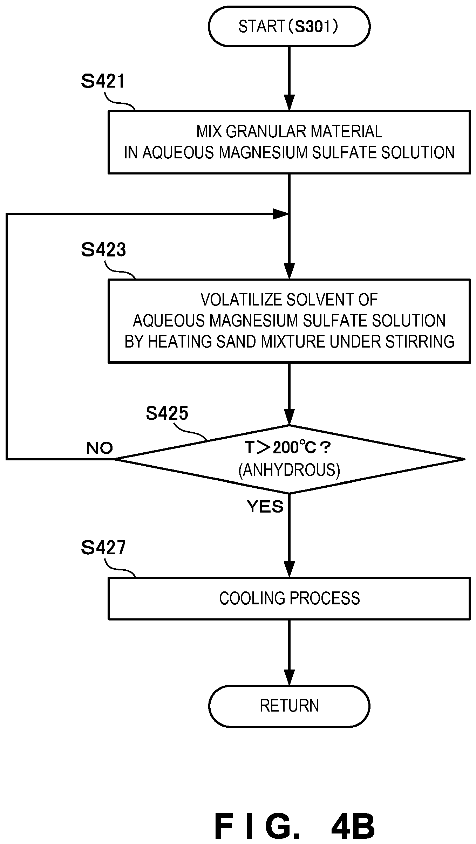

Fig. 4B is a flowchart showing other examples of the steps of the magnesium sulfate-including granular material producing method (S301) of this embodiment. Note that Fig. 4B shows an example in which a granular material is coated with anhydrous magnesium sulfate, but a coating of a magnesium sulfate hydrate is produced when the heating temperature is lower than 200°C, and this material can also be used as the shaping material of a three-dimensional laminated and shaped mold.

In step S421, a granular material and an aqueous magnesium sulfate solution are mixed. In step S423, the sand mixture is heated under stirring, thereby volatilizing the solvent of the aqueous magnesium sulfate solution. In step S425, whether the temperature of the sand mixture exceeds 200°C and magnesium sulfate becomes anhydrous is determined.

Steps S423 and S425 are repeated until the temperature of the sand mixture exceeds 200°C and magnesium sulfate becomes anhydrous. If the temperature of the sand mixture exceeds 200°C and magnesium sulfate becomes anhydrous, a cooling process is performed on the sand mixture in step S427, thereby producing a granular material coated with anhydrous magnesium sulfate.

<<Manufacturing Materials of Three-Dimensional Laminated and Shaped Mold>>

As manufacturing materials for use in the three-dimensional laminated and shaped mold manufacturing apparatus 100 of this embodiment, the refractory granular material and binder will be explained in detail below.

(Magnesium Sulfate)

As magnesium sulfate as the binder of this embodiment, it is possible to use anhydrous magnesium sulfate or magnesium sulfate including crystallization water. It is also possible to use a material in which anhydrous magnesium sulfate and magnesium sulfate including crystallization water coexist. Note that when using magnesium sulfate in the form of a sand mixture with the refractory granular material, anhydrous magnesium sulfate having a grain size of 300 $\mu$m or less is more favorable. Note also that when manufacturing coating sand, magnesium sulfate is preferably used in the form of an aqueous magnesium sulfate solution.

(Granular Material)

The granular material of this embodiment is particularly a refractory granular material, and examples are natural sand such as silica sand, olivine sand, zircon sand, chromite sand, alumina sand, and mullite sand, and artificial sand. It is also possible to use collected used natural sand or artificial sand, or reproduced used natural sand or artificial sand. Furthermore, a granular material in which different natural sands and/or artificial sands coexist can also be used.

Artificial sand is generally obtained by a sintering method, fusion method, or flame-fusion method by using bauxite as a raw material. Note that the practical conditions and the like of the sintering method, fusion method, or flame-fusion method are not particularly limited, so artificial sand need only be manufactured by using the well-known conditions and the like described in, e.g., Japanese Patent Laid-Open Nos. 5-169184, 2003-251434, and 2004-202577.

The average grain size of the refractory granular material is preferably 50 to 300 $\mu$m, and more preferably, 75 to 150 $\mu$m. When the average grain size is 300 $\mu$m or less, a three-dimensional laminated and shaped mold having a high surface phase degree is obtained. "A surface phase degree" herein mentioned is the surface roughness of the three-dimensional laminated and shaped mold in the lamination direction.

As the refractory granular material, artificial sand hardly expands due to fire or heat (the thermal expansibility is low). If the thermal expansibility is high, a veining defect readily occurs. "A veining defect" herein mentioned is a burr-like defect which occurs when a mold cracks due to thermal expansion during casting and a molten metal flows into the crack. When artificial sand is used as the refractory granular material, it is possible to manufacture a large-sized mold or a mold which can be used even when pouring a high-temperature molten metal. That is, a veining defect hardly occurs.

Note that natural sand is more inexpensive than artificial sand, so it is favorable to mix natural sand and artificial sand in order to reduce the manufacturing cost.

Silica sand is favorable as natural sand. This is so because, e.g., zircon sand is relatively expensive as natural sand, chromite sand cannot easily be discarded because it includes chromium, and olivine sand tends to increase the surface phase degree of a three-dimensional laminated and shaped mold. Silica sand can alleviate these problems.

A mold is used to cast a cast metal, and disassembled after casting in order to extract the cast metal. That is, the cast metal is a final object (final product), but the mold is finally destroyed. Accordingly, a readily discardable inexpensive material having a sufficiently low surface phase degree is preferable.

(Magnesium Sulfate-Including Granular Material)

In this embodiment, the material of a shaped product is obtained by mixing or coating the surface of the refractory granular material with magnesium sulfate.

When using magnesium sulfate by mixing, it is favorable to use anhydrous magnesium sulfate having a grain size of 300 $\mu$m or less. However, a magnesium sulfate hydrate can also be used.

When using magnesium sulfate by coating, the refractory granular material and an aqueous magnesium sulfate solution are first mixed. Then, while the solvent of the aqueous magnesium sulfate solution is volatilized by heating the sand mixture under stirring, the refractory granular material is heated to 200°C or more. When the temperature is 200°C or more, magnesium sulfate becomes anhydrous. When magnesium sulfate becomes anhydrous, the coating sand is extracted by cooling the material to 25°C or less. The surface of the refractory granular material is coated with magnesium sulfate through the series of steps described above.

On the other hand, when performing coating by using a magnesium sulfate hydrate instead of anhydrous magnesium sulfate, coating sand of the magnesium sulfate hydrate is produced by setting the heating temperature to be lower than 200°C. For example, coating sand of a magnesium sulfate heptahydrate is produced by mixing the refractory granular material and an aqueous magnesium sulfate solution, and heating the sand mixture to 70°C or more under stirring. To produce a coating of a magnesium sulfate hydrate, therefore, coating is performed at 70°C (inclusive) to 200°C (exclusive).

For the manufacture of a three-dimensional laminated and shaped mold, the mixing ratio of the granular material and magnesium sulfate in the magnesium sulfate-including granular material produced by mixing or coating is preferably such that the amount of magnesium sulfate is 1 to 10 pts.mass, particularly, 3 to 10 pts.mass with respect to 100 pts.mass of the granular material.

Note that the amount of water, except crystallization water of magnesium sulfate, included in the magnesium sulfate-including refractory granular material is preferably 0.1 mass% or less. If the water content exceeds 0.1 mass%, the fluidity of the coated refractory granular material decreases, and this sometimes makes recoating difficult. For example, even when mixing anhydrous magnesium sulfate in a granular material in which the water content exceeds 0.2 mass%, a magnesium sulfate hydrate is produced because water moves in the stage of mixing, so the water content of the granular material except crystallization water of magnesium sulfate is 0.1 mass% or less.

(Water Content Measuring Method)

The water content in the produced magnesium sulfate-including granular material was measured as free water in accordance with >JACT Testing Method S-9 Casting Sand Water Testing Method ('Testing Method Concerning mold and Mold Material', Small & Medium-Sized Enterprises Corporation, May 1999)", as a testing method of measuring free water of casting sand (the magnesium sulfate-including granular material of this embodiment).

A sample (the magnesium sulfate-including granular material of this embodiment) was weighed by 50 g, dried at 105°C to 110°C in a dryer, cooled to room temperature in a desiccator, and weighed after that. From the weight reduction when a constant weight is obtained by repeating this process, free water is calculated by:

$$\text{Free water } (\%) = \text{weight reduction (g)/sample (g)} \times 100$$

<<Granular Material Laminating Process and Inorganic Binder Printing Process>>.

For example, the step of performing an operation of laminating the magnesium sulfate-including refractory granular material and printing water on it will be performed as follows.

First, a refractory granular material is laminated on the bottom surface of a metal case placed in a three-dimensional laminating and shaping apparatus (available from CMET) using a printing shaping method, by the blade mechanism 101 including the recoater. Then, the printing nozzle head is scanned on the laminated refractory granular material by the printing nozzle head mechanism 102 based on data obtained by 3DCAD design of the shape of a three-dimensional laminated and shaped mold, thereby printing water by a discharge amount by which the amount of water is 10 pts.mass with respect 100 pts.mass of the refractory granular material. The bottom surface of the metal case is a shaping table, and vertically movable. After water is printed, the bottom surface (shaping table) of the metal case is moved down by one layer, the refractory granular material is laminated in the same manner as above, and water is printed on it. These operations are repeated. The thickness of one layer is preferably 100 to 500 μm, and more preferably, 200 to 300 μm.

Note that the amount of water to be printed is preferably 1 to 15 pts.mass, and more preferably, 5 to 10 pts.mass with respect to 100 pts.mass of the magnesium sulfate-including refractory granular material. When the water content is 1 pts.mass or more, the hydration reaction of the magnesium sulfate coating can be advanced. On the other hand, when the water content is 15 pts.mass or less, it is possible to prevent a decrease in adhesive force by the solvent effect of excess water not participating in the hydration reaction.

When a three-dimensional laminated and shaped mold is manufactured by using natural sand such as silica sand as the refractory granular material, a veining defect easily occurs in the obtained mold. The reason for this is probably as follows.

Since natural sand has a phase transition point, the volume expands by the heat of casting. In particular, the inside (a portion in contact with a molten metal) of the mold easily expands because the heat of the molten metal is easily transferred, but the outside of the mold hardly expands because the heat of the molten metal is hardly transferred. This difference between the expansions of the inside and outside produces a crack inside the mold.

By contrast, artificial sand of this embodiment hardly causes phase transition, and hence hardly expands by the heat of casting. Accordingly, a mold manufactured by using artificial sand hardly causes a veining defect.

Also, the ease with which a veining defect occurs increases as the size of a mold increases. The reason for this is presumably as follows.

A molten metal poured into a mold cools down and solidifies from the outside (a portion in contact with the mold) rather than the central portion. When the mold is small, the molten metal cools down within a short time, so the molten metal on the outside cools down and solidifies before the mold cracks. Even when the mold cracks after that, therefore, it is perhaps possible to prevent the molten metal from flowing into the crack. On the other hand, when the mold is large, the molten metal takes a long time to cool down. Therefore, the mold probably cracks and causes a veining defect before the molten metal on the outside completely solidifies.

Accordingly, when using relatively inexpensive natural sand which readily causes a veining defect and relatively expensive artificial sand which hardly causes a veining defect, a three-dimensional laminated and shaped mold as a manufacturing target can be manufactured more efficiently by appropriately adjusting the use range of the granular material by taking account of the performance and cost required of the three-dimensional laminated and shaped mold, for each mold to be manufactured or for each portion of a mold to be manufactured.

<<Effects of This Embodiment>>

In this embodiment, fluidity close to that of dried sand is secured because the magnesium sulfate-including refractory granular material is used. Furthermore, the refractory granular material in an unprinted portion is directly reusable. That is, the sand mold after pouring is washed with water to elute the binder and dried, thereby reusing the refractory granular material.
In addition, the three-dimensional laminated and shaped mold manufacturing apparatus using the magnesium sulfate-including refractory granular material of this embodiment and water can manufacture a three-dimensional laminated and shaped mold at a speed higher than 50,000 cc, e.g., at a speed of 100,000 cc, and can also maintain the strength of the three-dimensional laminated and shaped mold.
For example, the upper limit of the manufacturing speed of the two-component self-hardening mold described in patent literature 1 is 50,000 cc. This is so because the liquid hardener added to the granular material decreases the fluidity, so the fluidity is maintained by reducing the liquid hardener, and the amount of binder is increased, and as a consequence the hardening time prolongs. Furthermore, when the fluidity of the granular material is low, it is necessary to add vibrations to the blade mechanism 101 including the recoater.
Since the magnesium sulfate-including granular material of this embodiment is spherical and dry, the recoating property improves, and this makes high-speed three-dimensional laminated and shaped mold manufacture possible. It is also possible to rapidly selectively bond magnesium sulfate by printing water.
Note that in this embodiment, the magnesium sulfate-including granular material has been explained as an inorganic binder. However, it is also possible to use a mixture with another inorganic binder (e.g., calcium sulfate).

Examples

Examples of the present invention will be explained in more detail below, but the present invention is not limited to these examples. Note that coating sand used in these examples will be presented below, and methods of measuring the thermal expansion coefficient and generated gas component of a test piece obtained by each example will be presented below. Examples using anhydrous magnesium sulfate as magnesium sulfate included in the granular material will be explained below, but the same effect can be obtained when using a magnesium sulfate hydrate.

(Magnesium Sulfate Sand Mixture)

Five pts.mass of anhydrous magnesium sulfate having a grain size of 300 $\mu$m or less were added to 100 pts.mass of a refractory granular material, and the two materials were mixed for 3 min by a mixer. Note that when using a magnesium sulfate hydrate, for example, when producing a magnesium sulfate sand mixture by using a magnesium sulfate heptahydrate, the addition amount of the magnesium sulfate heptahydrate is 10.24 pts.mass because the formula weight of the magnesium sulfate heptahydrate is 246.37 pts.mass and that of magnesium sulfate is 120.37. Even in this case, the addition amount is 5 pts.mass as the amount of anhydrous magnesium sulfate.

(Magnesium Sulfate Coating Sand)

Twenty-five pts.mass of an aqueous 20% magnesium sulfate solution were mixed in 100 pts.mass of a refractory granular material. Then, the sand mixture was heated under stirring, thereby volatilizing the solvent of the aqueous magnesium sulfate solution, and heating the refractory granular material to 200°C or more. When the temperature became 200°C or more, magnesium sulfate became anhydrous. When magnesium sulfate became anhydrous, the temperature was decreased to 25°C, and coating sand was formed by passing the sand mixture through a sieve having an opening of 0.3 mm.

(Measurement of Thermal Expansion Coefficient)

The thermal expansion coefficient of a test piece was measured as follows based on JACT test method M-2 (a rapid thermal expansion coefficient measurement test method of thermal expansion test methods).
The test piece was inserted into a furnace heated to 1,000°C, the expansion was measured for 5 min by a thermal expansion meter, and the thermal expansion coefficient was calculated by:

$$\text{Thermal expansion coefficient (\%)} = \{\text{expansion (mm)/length (mm) of unheated test piece}\} \times 100$$

(Gas Component Measurement)

Gas component qualitative analysis was performed on the lamination-shaped sand mold at a temperature of 350°C by using GC-MS (Q1000-GCMS manufactured by JEOL).

<<Results of Examples and Comparative Examples>>

Examples 1 to 4 will be explained in this order as the results of examples shown in Table 1, and Comparative Examples 1 to 4 will be explained in this order as the results of comparative examples shown in Table 1.

[Table 1] Examples

| | | | Example 1 | Example 2 | Comparative Example 1 | Comparative Example 2 | Comparative Example 3 | Comparative Example 4 |
|---|---|---|---|---|---|---|---|---|
| Refractory granular material | | | Silica sand | Fused artificial sand | Silica sand | Fused artificial sand | Silica sand | Fused artificial sand |
| Evaluation | Feasibility of laminating and shaping | X-axis direction | Feasible | Feasible | Feasible | Feasible | Feasible | Feasible |
| | | Y-axis direction | Feasible | Feasible | Feasible | Feasible | Feasible | Feasible |
| | | Z-axis direction | Feasible | Feasible | Feasible | Feasible | Feasible | Feasible |
| | Thermal expansion coefficient (%) | X-axis direction | 1.50 | 0.15 | 1.51 | 0.15 | 1.51 | 0.16 |
| | | Y-axis direction | 1.51 | 0.15 | 1.51 | 0.16 | 1.51 | 0.16 |
| | | Z-axis direction | 1.51 | 0.15 | 1.51 | 0.15 | 1.51 | 0.16 |
| | | State of test piece after measurement | Sand mold collapsed | Sand mold collapsed | Sand mold collapsed | Sand mold collapsed | Shape was maintained | Shape was maintained |
| | Generated gas component by GC-MS | | water | water | Methylfuran Ethylbenzene Xylene Sulfur dioxide | Methylfuran Ethylbenzene Xylene Sulfur dioxide | water | water |
| Sand regeneration method | | | Washing with water | Washing with water | Calcination | Calcination | Impossible | Impossible |

[Table 2] Comparative Examples

| | | | Comparative Example 1 | Comparative Example 2 | Comparative Example 3 | Comparative Example 4 |
|---|---|---|---|---|---|---|
| Refractory granular material | | | Silica sand | Fused artificial sand | Silica sand | Fused artificial sand |
| Evaluation | Feasibility of laminating and shaping | X-axis direction | Feasible | Feasible | Feasible | Feasible |
| | | Y-axis direction | Feasible | Feasible | Feasible | Feasible |
| | | Z-axis direction | Feasible | Feasible | Feasible | Feasible |
| | Thermal expansion coefficient (%) | X-axis direction | 1.50 | 0.15 | 1.51 | 0.16 |
| | | Y-axis direction | 1.51 | 0.16 | 1.51 | 0.16 |
| | | Z-axis direction | 1.51 | 0.15 | 1.51 | 0.16 |
| | | State of test piece after measurement | Sand mold collapsed | Sand mold collapsed | Sand mold collapsed | Sand mold collapsed |
| | Generated gas component by GC-MS | | water | water | Methylfuran Ethylbenzene Xylene Sulfur dioxide | Methylfuran Ethylbenzene Xylene Sulfur dioxide |
| Sand regeneration method | | | Calcination | Calcination | Impossible | Impossible |

<<Examples>>

[Example 1]

A sand mixture in which magnesium sulfate was mixed was prepared as a refractory granular material by using silica sand (FS001-EU distributed by EX ONE, average grain size = 106 $\mu$m).

This refractory granular material was laminated, by a blade mechanism including a recoater, on the bottom surface of a metal case placed in a three-dimensional laminating apparatus (manufactured by CMET) using a printing shaping method.

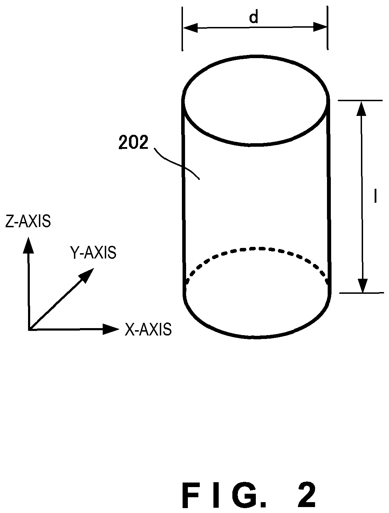

Then, a printing nozzle head was scanned on the laminated refractory granular material based on data obtained by 3DCAD design of the shape of a three-dimensional laminated and shaped mold, thereby printing water such that the discharge amount was 10 pts.mass with respect to 100 pts.mass of the laminated sand. After water was printed, the bottom surface (a shaping table) of the metal case was moved down by one layer (280 $\mu$m), the refractory granular material was laminated in the same manner as above, and water was printed on it such that the discharge amount was 10 pts.mass with respect to 100 pts.mass of the laminated sand. By repeating this process including lamination and printing, a columnar laminated product 202 having a diameter d of 30 mm and a length L of 50 mm as shown in Fig. 2 was manufactured.

Note that three types of laminated products 202 were manufactured by repeating the process of laminating the granular material in the three directions of X-, Y-, and Z-axes shown in Fig. 2, and printing water on the laminated granular material. In this process, whether lamination was feasible (the feasibility of lamination) in each direction was visually checked. Table 1 shows the checking results of the feasibility of lamination.

After printing, a columnar test piece (three-dimensional laminated and shaped mold) having a diameter of 30 mm and a length of 50 mm was obtained by removing the refractory granular material from a water unprinted portion by a brush. After that, processing was performed for 5 min by using a microwave of 900 W.

The thermal expansion coefficient of each obtained test piece was measured. Table 1 shows the measurement result of the thermal expansion coefficient.

Also, the refractory granular material in the water unprinted portion was not reproduced but reused as reusable sand. Furthermore, the manufactured mold collapses at the same time it is placed in water, and the refractory granular material can be reused after being dried.

[Example 2]

Test pieces were manufactured and evaluated following the same procedures as in Example 1, except that coating sand using artificial sand (CERABEADS X #1450 manufactured by ITOCHU CERATECH, average grain size = 106 $\mu$m) obtained by a sintering method was used as the refractory granular material. Table 1 shows the evaluation results of Example 2.

[Example 3]

Coating sand coated with magnesium sulfate was prepared as a refractory granular material by using silica sand (FS001-EU distributed by EX ONE, average grain size = 106 $\mu$m).

This refractory granular material was laminated, by a blade mechanism including a recoater, on the bottom surface of a metal case placed in a three-dimensional laminating apparatus (manufactured by CMET) using a printing shaping method.

Then, a printing nozzle head was scanned on the laminated refractory granular material based on data obtained by 3DCAD design of the shape of a three-dimensional laminated and shaped mold, thereby printing water such that the discharge amount was 10 pts.mass with respect to 100 pts.mass of the laminated sand. After water was printed, the bottom surface (a shaping table) of the metal case was moved down by one layer (280 $\mu$m), the refractory granular material was laminated in the same manner as above, and water was printed on it such that the discharge amount was 10 pts.mass with respect to 100 pts.mass of the laminated sand. By repeating this process including lamination and printing, a columnar laminated product 202 having a diameter d of 30 mm and a length L of 50 mm as shown in Fig. 2 was manufactured.

Note that three types of laminated products 202 were manufactured by repeating the process of laminating the granular material in the three directions of X-, Y-, and Z-axes shown in Fig. 2, and printing water on the laminated granular material. In this process, whether lamination was feasible (the feasibility of lamination) in each direction was visually checked. Table 1 shows the checking results of the feasibility of lamination.

After printing, a columnar test piece (three-dimensional laminated and shaped mold) having a diameter of 30 mm and a length of 50 mm was obtained by removing the refractory granular material from a water unprinted portion by a brush. After that, processing was performed for 5 min by using a microwave of 900 W.

The thermal expansion coefficient of each obtained test piece was measured. Table 1 shows the measurement result of the thermal expansion coefficient.

Also, the refractory granular material in the water unprinted portion was not reproduced but reused as reusable sand. Furthermore, the manufactured mold collapses at the same time it is placed in water, and the refractory granular material can be reused after being dried.

[Example 4]

Test pieces were manufactured and evaluated following the same procedures as in Example 1, except that coating sand using artificial sand (CERABEADS #1450 manufactured by ITOCHU CERATECH, average grain size = 106 $\mu$m) obtained by a sintering method was used as the refractory granular material. Table 1 shows the evaluation results of Example 4.

Also, the refractory granular material in a water unprinted portion was not reproduced but reused as reusable sand. Furthermore, the manufactured mold collapses at the same time it is placed in water, and the refractory granular material can be reused after being dried.

<<Comparative Examples 1 - 4>>

A hardener solution including 55 pts.mass of xylene sulfonic acid which is a liquid at room temperature (20°C), 10 pts.mass of sulfuric acid, and 35 pts.mass of water was prepared. Kneaded sand was formed by using 0.3 pts.mass of the hardener and silica sand (FS001-EU distributed by EX ONE, average grain size = 106 $\mu$m).

A binder was formed by mixing 0.3 pts.mass of N-$\beta$(aminoethyl)$\gamma$-aminopropylmethyldimethoxysilane in 100 pts.mass of a solution mixture including 90 pts.mass of furfuryl alcohol and 10 pts.mass of bisphenol A.

The kneaded sand was laminated on the bottom surface of a metal case placed in a three-dimensional laminating apparatus (S-Print manufactured by EX ONE) using a printing shaping method, by a blade mechanism including a recoater. Then, a printing nozzle head was scanned on the laminated kneaded sand based on data obtained by 3DCAD design of the shape of a three-dimensional laminated and shaped mold, thereby printing the binder. After the binder was printed, the bottom surface (a shaping table) of the metal case was moved down by one layer (280 $\mu$m), the refractory granular material was laminated first in the same manner as above, and the binder was printed on it. By repeating this process including lamination and printing, a columnar laminated product having a diameter d of 30 mm and a length L of 50 mm as shown in Fig. 2 was manufactured.

Note that three types of laminated products were manufactured by repeating the process of laminating the refractory granular material in the three directions of X-, Y-, and Z-axes shown in Fig. 2, and printing the binder on the laminated refractory granular material. In this process, whether lamination was feasible (the feasibility of lamination) in each direction was visually checked. Table 2 shows the results of the feasibility of lamination.

After printing, a columnar test piece (three-dimensional laminated and shaped mold) having a diameter of 30 mm and a length of 50 mm was obtained by removing the kneaded sand from a binder unprinted portion by a brush.

The thermal expansion coefficient and gas component of each obtained test piece were measured. Table 2 shows the measurement results of the thermal expansion coefficient and gas component.

Also, since the kneaded sand in a binder unprinted portion was green, the kneaded sand was reproduced by calcination and reused. Furthermore, the refractory granular material can be reused by reproducing the manufactured mold by calcination.

[Comparative Example 2]

0.3 pts.mass of the hardener prepared in Comparative Example 1 were added to 100 pts.mass of artificial sand (CERABEADS X #1450 manufactured by ITOCHU CERATECH, average grain size = 106 $\mu$m) obtained by a sintering method, and the obtained material was kneaded, thereby obtaining kneaded sand.

Test pieces were manufactured and evaluated following the same procedures as in Comparative Example 1, except that the obtained kneaded sand was used as the refractory granular material. Table 2 shows the evaluation results of Comparative Example 2.

Also, since the kneaded sand in a binder unprinted portion was green, the kneaded sand was reproduced by calcination and reused as reusable sand.

[Comparative Example 3]

A powder obtained by spraying and drying water glass having a molar ratio ($SiO_2/Na_2O$) of 2.5 was prepared as a binder. Kneaded sand was formed from 3 pts.mass of this binder by using silica sand (FS001-EU distributed by EX ONE, average grain size = 106 $\mu$m).

This kneaded sand was laminated, by a blade mechanism including a recoater, on the bottom surface of a metal case placed in a three-dimensional laminating apparatus (manufactured by CMET) using a printing shaping method. Then, a printing nozzle head was scanned on the laminated kneaded sand based on data obtained by 3DCAD design of the shape of a three-dimensional laminated and shaped mold, thereby printing water such that the discharge amount was 10 pts.mass with respect to 100 pts.mass of the laminated sand. After water was printed, the bottom surface (a shaping table) of the metal case was moved down by one layer (280 $\mu$m), the refractory granular material was laminated in the same manner as above, and water was printed on it such that the discharge amount was 10 pts.mass with respect to 100 pts.mass of the laminated sand. By repeating this process including lamination and printing, a columnar laminated product 202 having a diameter d of 30 mm and a length L of 50 mm as shown in Fig. 2 was manufactured.

Note that three types of laminated products 202 were manufactured by repeating the process of laminating the granular material in the three directions of X-, Y-, and Z-axes shown in Fig. 2, and printing water on the laminated granular material. In this process, whether lamination was feasible (the feasibility of lamination) in each direction was visually checked. Table 2 shows the checking results of the feasibility of lamination.

After printing, a columnar test piece (three-dimensional laminated and shaped mold) having a diameter of 30 mm and a length of 50 mm was obtained by removing the refractory granular material from a water unprinted portion by a brush. After that, processing was performed for 5 min by using a microwave of 900 W.

The thermal expansion coefficient of each obtained test piece was measured. Table 2 shows the measurement result of the thermal expansion coefficient.

Also, the refractory granular material in the water unprinted portion was not reproduced but reused as reusable sand. However, the manufactured mold is disposed because it cannot be reproduced.

[Comparative Example 4]

Test pieces were manufactured and evaluated following the same procedures as in Comparative Example 3, except that coating sand using artificial sand (CERABEADS #1450 manufactured by ITOCHU CERATECH, average grain size = 106 $\mu$m) obtained by a sintering method was used as the refractory granular material. Table 2 shows the evaluation results of Comparative Example 4.

Also, the refractory granular material in a water unprinted portion was not reproduced but reused as reusable sand. However, the manufactured mold is disposed because it cannot be reproduced.

**Claims**

1. A granular material for use in a three-dimensional laminated and shaped mold manufacturing apparatus, including magnesium sulfate.

2. The granular material according to claim 1, wherein an amount of the magnesium sulfate included in the granular material is 1 to 10 pts.mass with respect to 100 pts.mass of the granular material.

3. The granular material according to claim 1 or 2, wherein a water content of the granular material is not more than 0.1 mass% except for crystallization water included in the magnesium sulfate.

4. The granular material according to any one of claims 1 to 3, wherein the magnesium sulfate is mixed by stirring the granular material and the magnesium sulfate by a mixer.

5. The granular material according to claim 4, wherein the magnesium sulfate includes at least one of anhydrous magnesium sulfate and a magnesium sulfate hydrate.

6. The granular material according to claim 5, wherein the magnesium sulfate is anhydrous magnesium sulfate having a grain size of not more than 300 $\mu$m.

7. The granular material according to any one of claims 1 to 3, wherein the granular material is coated with the magnesium sulfate.

8. The granular material according to claim 7, wherein the granular material is coated with the magnesium sulfate by mixing the granular material and an aqueous magnesium sulfate solution, and volatilizing a solvent of the aqueous magnesium sulfate solution by heating the sand mixture under stirring.

9. The granular material according to claim 8, wherein the granular material is coated with anhydrous magnesium sulfate by mixing the granular material and an aqueous magnesium sulfate solution, volatilizing a solvent of the aqueous magnesium sulfate solution by heating the sand mixture under stirring, and cooling the sand mixture when the magnesium sulfate becomes anhydrous at not less than 200°C.

10. The granular material according to claim 8, wherein a magnesium sulfate hydrate is used as a coating by mixing the granular material and an aqueous magnesium sulfate solution, and volatilizing a solvent of the aqueous magnesium sulfate solution at less than 200°C by heating the sand mixture under stirring.

11. The granular material according to any one of claims 1 to 10, further comprising at least one of artificial sand and natural sand including silica sand.

12. The granular material according to claim 11, wherein the artificial sand is obtained by one of a sintering method, a fusion method, and a flame-fusion method.

13. The granular material according to claim 11 or 12, wherein the granular material is a refractory granular material having an average grain size of 50 to 300 $\mu$m.

14. A three-dimensional laminated and shaped mold shaped by being selectively hardened by water by using a granular material according to any one of claims 1 to 13.

15. The three-dimensional laminated and shaped mold according to claim 14, shaped by being selectively hardened by not less than 15 pts.mass of water with respect to 100 pts.mass of the granular material.

16. A three-dimensional laminated and shaped mold manufacturing apparatus using:

    a granular material including magnesium sulfate, as a shaping material to be spread into layers and selectively bonded; and
    water as a hardening agent for selectively bonding the granular material.

17. The three-dimensional laminated and shaped mold manufacturing apparatus according to claim 16, wherein not less than 15 pts.mass of water are used with respect to 100 pts.mass of the granular material.

18. The three-dimensional laminated and shaped mold manufacturing apparatus according to claim 16 or 17, wherein a lamination-shaped product is further hardened by a microwave after laminating and shaping.

19. A three-dimensional laminated and shaped mold manufacturing method comprising:

    producing a granular material including magnesium sulfate;
    spreading the magnesium sulfate-including granular material into layers;
    hardening the granular material spread into layers by selectively ejecting water such that the granular material spread into layers is bonded in accordance with a target three-dimensional laminated and shaped mold; and
    repeating the spreading and the hardening until the target three-dimensional laminated and shaped mold is shaped.

20. The three-dimensional laminated and shaped mold manufacturing method according to claim 19, wherein said producing step includes stirring the granular material and the magnesium sulfate by a mixer, and produces a granular material in which the magnesium sulfate is mixed.

21. The three-dimensional laminated and shaped mold manufacturing method according to claim 19, wherein said producing step includes:

    mixing the granular material and an aqueous magnesium sulfate solution; and
    volatilizing a solvent of the aqueous magnesium sulfate solution by heating the sand mixture under stirring, and produces a granular material coated with the magnesium sulfate.

22. The three-dimensional laminated and shaped mold manufacturing method according to any one of claims 19 to 21, further comprising hardening a lamination-shaped product having undergone lamination-shaping by a microwave.

23. The three-dimensional laminated and shaped mold manufacturing method according to any one of claims 19 to 22, further comprising adding water after pouring is performed in the shaped three-dimensional laminated and shaped mold, thereby decomposing the three-dimensional laminated and shaped mold and reproducing the granular material,
    wherein in said producing step, the magnesium sulfate is added to the reproduced granular material.

**F I G. 1**

**FIG. 2**

START

S301 — PRODUCE GRANULAR MATERIAL CONTAINING MAGNESIUM SULFATE

S303 — SPREAD PRODUCED GRANULAR MATERIAL INTO LAYERS

S305 — HARDEN GRANULAR MATERIAL BY SELECTIVELY EJECTING WATER FROM INKJET HEAD

S307 — THREE-DIMENSIONAL LAMINATED AND SHAPED MOLD?

NO

YES

S309 — FURTHER HARDEN LAMINATION-SHAPED PRODUCT BY MICROWAVE

S311 — PRODUCE THREE-DIMENSIONAL SHAPED PRODUCT BY POURING USING THREE-DIMENSIONAL LAMINATION-SHAPED MOLD

S313 — REPRODUCE GRANULAR MATERIAL BY ADDING WATER TO THREE-DIMENSIONAL LAMINATED AND SHAPED MOLD

END

F I G. 3

START (S301)

S411

ADD ANHYDROUS MAGNESIUM
SULFATE TO GRANULAR MATERIAL

S413

MIX BY STIRRING USING MIXER

RETURN

# F I G. 4A

START (S301)

S421

MIX GRANULAR MATERIAL
IN AQUEOUS MAGNESIUM SULFATE SOLUTION

S423

VOLATILIZE SOLVENT OF
AQUEOUS MAGNESIUM SULFATE SOLUTION
BY HEATING SAND MIXTURE UNDER STIRRING

S425

NO — T > 200℃ ?
(ANHYDROUS)

YES

S427

COOLING PROCESS

RETURN

F I G. 4B

**INTERNATIONAL SEARCH REPORT**

| International application No. |
| --- |
| PCT/JP2016/054344 |

A. CLASSIFICATION OF SUBJECT MATTER
*B22C1/18*(2006.01)i, *B22C9/02*(2006.01)i, *B33Y10/00*(2015.01)i, *B33Y70/00* (2015.01)i

According to International Patent Classification (IPC) or to both national classification and IPC

B. FIELDS SEARCHED

Minimum documentation searched (classification system followed by classification symbols)
B22C1/00-B22C9/30, B33Y10/00, B33Y70/00

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 53-119724 A  (Hitachi, Ltd.),<br>19 October 1978 (19.10.1978),<br>page 2, upper left column, line 10 to page 3,<br>lower left column, the last line<br>(Family: none) | 1,7,11,13<br>23 |
| Y | WO 2015/029935 A1  (Asahi Organic Chemicals Industry Co., Ltd.),<br>05 March 2015 (05.03.2015),<br>paragraphs [0031] to [0068]; fig. 1 to 7<br>(Family: none) | 1-23 |

☒ Further documents are listed in the continuation of Box C.          ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>03 March 2016 (03.03.16) | Date of mailing of the international search report<br>22 March 2016 (22.03.16) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/054344

C (Continuation).  DOCUMENTS CONSIDERED TO BE RELEVANT

| Category* | Citation of document, with indication, where appropriate, of the relevant passages | Relevant to claim No. |
|---|---|---|
| Y | WO 2007/077731 A1  (Tomita Pharmaceutical Co., Ltd.),<br>12 July 2007 (12.07.2007),<br>paragraphs [0042] to [0077]; fig. 1<br>& US 2009/0008055 A1<br>paragraphs [0044] to [0079]; fig. 1<br>& EP 1974838 A1          & JP 4247501 B | 4-6,11-20, 22-23 |
| Y | JP 2005-288518 A  (Matsumura Mold & Pattern Co., Ltd.),<br>20 October 2005 (20.10.2005),<br>paragraphs [0021] to [0025], [0028] to [0030]; fig. 1 to 5<br>(Family: none) | 18,22-23 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5249447 B
- JP 2014516845 PTC
- JP 5169184 A

- JP 2003251434 A
- JP 2004202577 A

### Non-patent literature cited in the description

- JACT Testing Method S-9 Casting Sand Water Testing Method. Testing Method Concerning mold and Mold Material. Small & Medium-Sized Enterprises Corporation, May 1999